# FASCICULE DE BREVET EUROPEEN

(11) **EP 3 278 393 B1**
(45) Date de publication et mention de la délivrance du brevet: **18.08.2021**
(21) Numéro de dépôt: 16712333.0
(22) Date de dépôt: 30.03.2016
(51) Int. Cl.: H01M 10/647, H01M 10/6555, H01M 10/6556, H01M 10/6557, H01M 10/617, F28D 21/00, F28F 1/00, F28F 1/32, H01M 10/625

(54) **MODULE DE BATTERIE, NOTAMMENT POUR VÉHICULE AUTOMOBILE, ET ÉCHANGEUR THERMIQUE POUR MODULE DE BATTERIE CORRESPONDANT**
BATTERIEMODUL, INSBESONDERE FÜR EIN KRAFTFAHRZEUG, UND ENTSPRECHENDER WÄRMETAUSCHER FÜR EIN BATTERIEMODUL
BATTERY MODULE, IN PARTICULAR FOR A MOTOR VEHICLE, AND CORRESPONDING HEAT EXCHANGER FOR A BATTERY MODULE

(30) Priorité: 30.03.2015 FR 1552664
(43) Date de publication de la demande: 07.02.2018
(73) Titulaire: Valeo Systemes Thermiques, 78320 Le Mesnil-Saint-Denis (FR)
(72) Inventeur: BOISSELLE, Patrick, 53022 Laval (FR); AZZOUZ, Kamel, 75012 Paris (FR)
(74) Mandataire: Neuviale, Bertrand
(86) Numéro de dépôt international: PCT/EP2016/056876
(87) Numéro de publication internationale: WO 2016/156365

(56) Documents cités:
- WO-A1-2013/165098
- US-A1- 2010 257 883
- US-A1- 2014 205 875
- US-A1- 2014 234 687

## Description

La présente invention concerne le domaine des batteries pour véhicule automobile, notamment électrique ou hybride, et concerne plus particulièrement un module de batterie comprenant un échangeur thermique notamment pour le refroidissement d'un module de batterie.

L'invention concerne également un tel échangeur thermique.

Une batterie comprend un assemblage de modules, eux-mêmes comprenant un assemblage de cellules électrochimiques en série et/ou en parallèle.

Les cellules électrochimiques peuvent être de type cylindrique, prismatique ou souple. Selon la technologie des cellules souples, également appelée « pouch-cells » en anglais, chaque cellule souple comprend une enveloppe métallique intégrant une électrode positive, une électrode négative et un séparateur. Chaque cellule comprend également une borne positive et une borne négative.

En plus de l'impact du vieillissement des cellules sur la durée de vie d'un module de batterie, les charges et les décharges de la batterie provoquent une production de chaleur qui peut conduire à une altération prématurée voire à la détérioration des cellules. En outre, une différence de température entre les cellules du module de batterie entraîne un vieillissement inégal des cellules de batterie.

Les cellules de batterie doivent être refroidies pour dissiper la perte de chaleur.

À cet effet, un fluide caloporteur tel qu'un liquide de refroidissement circule à l'intérieur d'éléments d'échange thermique, tels que des plaques de refroidissement agencées de part et d'autre des cellules du module de batterie.

De façon connue, les plaques de refroidissement présentent respectivement un canal périphérique pour la circulation d'un fluide caloporteur, tel que du liquide de refroidissement.

Un inconvénient connu est la distribution de température non uniforme. En effet, avec cette solution de l'état de l'art, le refroidissement d'une cellule est localisée surtout en périphérie de cette cellule.

De plus, la température du liquide de refroidissement qui entre à un emplacement dans le canal de refroidissement augmente au fur et à mesure de l'absorption de chaleur. De la sorte, les cellules sont mieux refroidies au niveau de l'entrée de liquide de refroidissement qu'au niveau de la sortie.

En outre, ces plaques de refroidissement sont brasées entre elles et la multitude de connectiques augmente le risque de défaillance d'étanchéité.

Selon une autre variante connue, des plaques de refroidissement présentant des canaux de circulation du liquide de refroidissement intégrés sont agencées entre les cellules et sont brasées entre elles et à des conduits d'entrée et de sortie du liquide de refroidissement.

Cependant, toutes ces liaisons brasées sont autant de sources potentielles de fuite du liquide de refroidissement, notamment en raison de phénomènes de dilatation en fonctionnement.

De plus, seuls les canaux de circulation du liquide de refroidissement sont en contact avec les cellules. Le refroidissement de la cellule n'est donc pas non plus uniforme avec cette variante. Les documents US2010275883, US2014205875, WO2013165098, US2014234687 décrivent des modules de batterie comportant un échangeur thermique.

La présente invention a pour objet de résoudre ces problèmes de l'état de l'art en proposant un échangeur thermique pour module de batterie dont la structure et le positionnement par rapport aux surfaces des cellules permet d'améliorer l'efficacité des échanges thermiques et donc le refroidissement des cellules du module de batterie, tout en optimisant l'étanchéité. L'objet de la présente invention est défini dans les revendications.

À cet effet, l'invention a pour objet un module de batterie, notamment pour véhicule automobile, comprenant un empilement de cellules électrochimiques et un échangeur thermique tel que défini précédemment, caractérisé en ce que l'échangeur thermique comprend :
- une pluralité d'éléments d'échange thermique, entre lesquels est positionnée au moins une cellule électrochimique en contact thermique et mécanique contre au moins un élément d'échange thermique, et
- une pluralité de canaux de circulation d'un fluide caloporteur assemblés mécaniquement aux éléments d'échange thermique.

Un module de batterie intégrant un tel échangeur thermique à assemblage mécanique permet d'augmenter la fonctionnalité et la sécurité du module de batterie.

En effet, l'échange thermique et donc le refroidissement des cellules est amélioré du fait du contact direct entre les cellules et les éléments d'échange thermique par exemple sous forme de plaques. Les plaques assurent par contact mécanique d'une part avec les canaux de circulation du fluide et d'autre part avec les cellules, le refroidissement de ces cellules.

De plus, le module de batterie ne présente pas de liaisons brasées mais au contraire ces liaisons sont mécaniques entre les plaques et les canaux, ce qui garantit une étanchéité de l'échangeur thermique au contact des cellules du module de batterie ainsi qu'une bonne résistance aux chocs thermiques.

Le module de batterie peut en outre comporter une ou plusieurs caractéristiques suivantes, prises séparément ou en combinaison :
- Chaque cellule électrochimique est intercalée entre deux éléments d'échange thermique, en contact thermique et mécanique contre les deux éléments d'échange thermique.
- Au moins deux cellules électrochimiques sont agencées entre deux éléments d'échange thermique, et au moins un isolant électrique est intercalé entre deux cellules électrochimiques adjacentes.
- Les canaux de circulation de fluide caloporteur sont assemblés par sertissage aux éléments d'échange thermique.
- Les éléments d'échange thermique présentent une pluralité d'ouvertures pour le passage des canaux de circulation de fluide caloporteur. Les ouvertures sont ménagées sur une zone d'un élément d'échange thermique dépourvue de contact mécanique avec une cellule électrochimique.

La pluralité de canaux en contact mécanique direct avec les éléments d'échange thermique permettent une distribution de la température sur toute la surface de l'élément d'échange thermique. Dans le cas particulier du refroidissement du module de batterie, ces canaux transmettent du froid à un élément d'échange thermique qui peut alors refroidir la cellule de façon ciblée ou uniforme.
- Les éléments d'échange thermique sont réalisés dans un matériau métallique, par exemple en aluminium ou alliage d'aluminium.
- Les canaux de circulation de fluide caloporteur sont réalisés dans un matériau métallique, par exemple en aluminium ou alliage d'aluminium.
- Les éléments d'échange thermique sont réalisés sous forme de plaques et les cellules électrochimiques présentent une forme générale sensiblement parallélépipédique complémentaire de la forme des éléments d'échange thermique de l'échangeur thermique, par exemple en forme de plaques.

Les cellules électrochimiques sont par exemple des cellules souples.

Ainsi, lorsque les surfaces des cellules et des éléments d'échange thermique sont accolées, le contact est uniforme. On améliore ainsi l'échange thermique.
- Selon un mode de réalisation préféré, les canaux de circulation de fluide caloporteur sont agencés de façon à traverser les plaques en périphérie des plaques et en s'étendant sensiblement perpendiculairement aux plaques.
- Les canaux de circulation de fluide caloporteur sont agencés sensiblement droits en traversant les éléments d'échange thermique.
- Les canaux de circulation du fluide caloporteur sont agencés de façon sensiblement parallèle les uns aux autres.
- Un premier groupe de canaux de circulation du fluide caloporteur sont agencés de façon sensiblement parallèle les uns aux autres selon une première direction, et au moins un deuxième groupe de canaux de circulation du fluide caloporteur sont agencés de façon sensiblement parallèle les uns aux autres selon une deuxième direction différente de la première direction. En jouant sur l'orientation des canaux de circulation, on peut augmenter la concentration des canaux au niveau des éléments d'échange thermique et ainsi améliorer l'échange thermique.
- Les canaux de circulation de fluide caloporteur sont réalisés sous forme de tubes, par exemple de section sensiblement circulaire ou ovale. La section des tubes peut être adaptée de manière notamment à augmenter le nombre de tubes traversant les éléments d'échange thermique, par exemple sur une zone particulière des éléments d'échange thermique pour un refroidissement ciblé des cellules, ou encore sur toute la surface des éléments d'échange thermique pour un refroidissement uniforme des cellules du module de batterie.
- Les canaux de circulation de fluide caloporteur sont assemblés aux éléments d'échange thermique avec un pas irrégulier entre lesdits canaux. Ceci permet de définir des zones des éléments d'échange thermique avec plus ou moins de tubes, les zones ayant le plus de tubes bénéficiant d'un plus grand échange thermique, offrant notamment un refroidissement ciblé sur certaines zones des cellules du module de batterie, par exemple à proximité des bornes de connexion des cellules.
- L'échangeur comprend au moins un collecteur du fluide caloporteur, et les canaux de circulation du fluide caloporteur présentent respectivement au moins une extrémité assemblée mécaniquement au collecteur avec interposition d'un joint d'étanchéité compressible. Ceci contribue à la mise en œuvre d'une technologie à assemblage mécanique permettant de minimiser les risques de fuite de fluide au sein de l'échangeur thermique.
- Le collecteur comprend une plaque collectrice pour recevoir les extrémités des canaux de circulation du fluide caloporteur et un couvercle, la plaque collectrice et le couvercle étant réalisés d'une seule pièce. On obtient ainsi une solution compacte.
- La plaque collectrice et le couvercle sont réalisés dans un même matériau, par exemple dans un matériau plastique.

L'invention concerne aussi un échangeur thermique pour un module de batterie tel que défini précédemment, l'échangeur thermique comprenant une pluralité d'éléments d'échange thermique et une pluralité de canaux de circulation d'un fluide caloporteur,
caractérisé en ce que les canaux de circulation d'un fluide caloporteur sont assemblés mécaniquement aux éléments d'échange thermique destinés à être agencés en contact thermique et mécanique contre au moins une cellule électrochimique.

L'échangeur thermique est à assemblage mécanique.

En utilisant uniquement des assemblages mécaniques de composants, à savoir sans brasage, à température ambiante, par exemple par sertissage, expansion de tubes, clippage ou autre liaison mécanique, on réduit les risques de fuite du fluide, qui peuvent s'avérer critiques au niveau des cellules du module de batterie.

Par ailleurs, un tel échangeur thermique à assemblage mécanique assure une bonne résistance aux chocs thermiques, et est en outre très résistant aux contraintes de vibrations et/ou de déformations mécaniques.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 est une vue en perspective simplifiée d'un module de batterie comprenant un échangeur thermique selon un premier mode de réalisation,
- la figure 2 est une vue en coupe schématique montrant un empilement de plaques de l'échangeur thermique selon le premier mode de réalisation et de cellules électrochimiques du module de batterie intercalées entre les plaques,
- la figure 3 est une vue en coupe schématique montrant un empilement de plaques de l'échangeur thermique selon un deuxième mode de réalisation et de cellules électrochimiques de module de batterie intercalées deux à deux entre les plaques,
- la figure 4 est une vue en coupe transversale du module de batterie de la figure 1, et
- la figure 5 est une vue en coupe transversale du module de batterie comprenant un échangeur thermique selon une variante de réalisation.

Sur ces figures, les éléments sensiblement identiques portent les mêmes références.

Les réalisations décrites ci-après sont des exemples. Bien que la description se réfère à un ou plusieurs modes de réalisation, ceci ne signifie pas nécessairement que chaque référence concerne le même mode de réalisation, ou que les caractéristiques s'appliquent uniquement à un seul mode de réalisation. De simples caractéristiques de différents modes de réalisation peuvent également être combinées pour fournir d'autres réalisations.

### Module de batterie

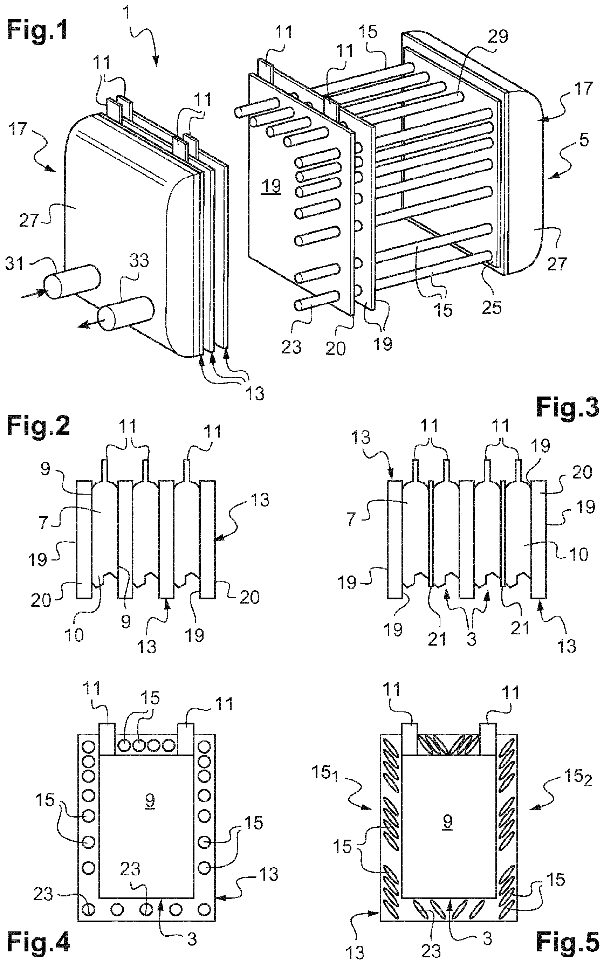

En référence à la figure 1, l'invention concerne un module de batterie 1, notamment pour véhicule automobile, comprenant un empilement de cellules 3 électrochimiques et intégrant un échangeur thermique 5 notamment pour le refroidissement des cellules 3 du module de batterie 1.

L'invention concerne plus particulièrement un tel échangeur thermique 5.

### Cellules de batterie

Le module de batterie 1 peut présenter un empilement de cellules 3 dites souples, communément appelées « *pouch cells* » en anglais. Ce type de cellule peut présenter une forme générale sensiblement plate avec des surfaces planes permettant un meilleur contact et donc un meilleur échange thermique avec l'échangeur thermique 5.

Selon les exemples de réalisation illustrés sur les figures 1 à 5, les cellules 3 présentent une forme générale sensiblement parallélépipédique.

Les cellules 3 comprennent respectivement une enveloppe 7 qui peut être flexible, dans le cas d'une cellule dite souple.

L'enveloppe 7 de chaque cellule 3 loge une électrode positive, une électrode négative et un séparateur, non visibles sur les figures. L'enveloppe 7 présente notamment deux faces latérales opposées 9, il s'agit ici de deux grandes faces latérales opposées s'étendant sur toute la longueur d'une cellule 3 donnée, par opposition aux deux petites faces latérales 10 s'étendant selon l'épaisseur de la cellule 3. L'électrode positive ou négative (non visible) d'une cellule 3 s'étend par exemple le long d'une grande face latérale 9 de l'enveloppe 7.

Les cellules 3 présentent respectivement deux bornes de connexion 11 isolées électriquement l'une de l'autre. Les bornes de connexion 11 forment ici respectivement un prolongement par rapport au plan défini par la plaque.

### Échangeur thermique

L'échangeur thermique 5 est notamment prévu pour refroidir les cellules électrochimiques 3.

L'invention concerne en particulier un échangeur thermique 5 à assemblage mécanique, c'est-à-dire dont les éléments sont reliés entre eux par assemblage mécanique uniquement, par opposition à un échangeur brasé.

L'échangeur thermique 5 comporte :
- une pluralité d'éléments d'échange thermique 13, et
- une pluralité de canaux 15 de circulation d'un fluide caloporteur assemblés mécaniquement aux éléments d'échange thermique 13.

L'échangeur thermique 5 comporte de plus au moins un collecteur 17 du fluide caloporteur, tel qu'une boîte collectrice 17. Dans l'exemple illustré, l'échangeur thermique 5 comporte deux boîtes collectrices 17 de part et d'autre du faisceau d'échange thermique comprenant les éléments d'échange thermique 13 et les canaux 15.

On entend par fluide caloporteur tout fluide permettant de transporter de la chaleur ou du froid entre deux milieux. Il s'agit notamment d'un fluide réfrigérant, tel que de l'eau glycolée.

Les éléments d'échange thermique 13 comprennent au moins un matériau conducteur thermique, tel qu'un matériau métallique, par exemple en aluminium ou alliage d'aluminium. Avantageusement, les éléments d'échange thermique 13 sont intégralement réalisés en un matériau conducteur thermique.

Selon le mode de réalisation illustré, les éléments d'échange thermique 13 sont réalisés sous forme de plaques 13 d'échange thermique, sensiblement rectangulaires, et agencées parallèles les unes aux autres. Ces plaques 13 sont avantageusement de forme complémentaire de la forme des cellules 3 dites souples selon l'exemple illustré.

Dans la suite de la description, on décrit l'exemple particulier avec des plaques 13 comme éléments d'échange thermique. Bien entendu, d'autres variantes d'éléments d'échange thermique sont envisageables.

Dans le cas d'un échangeur thermique 5 prévu pour le refroidissement d'un module de batterie 1, on parle également de plaque de refroidissement 13.

Les plaques 13 présentent notamment deux grandes faces latérales 19 opposées, par opposition aux deux petites faces latérales 20 s'étendant selon l'épaisseur de la plaque 13.

Les plaques 13 sont destinées à être agencées en contact thermique et mécanique contre au moins une cellule électrochimique 3, à l'assemblage du module de batterie 1. Ainsi, un échange thermique peut avoir lieu entre les cellules 3 du module de batterie 1 et les plaques 13 associées. Cet échange thermique est optimisé du fait du contact mécanique direct d'une plaque 13 sur toute la surface d'une cellule 3 associée.

En particulier, une grande face latérale 19 d'une plaque 13 peut être agencée en appui mécanique contre une grande face latérale 9 de l'enveloppe 7 d'une cellule 3.

Selon un exemple de réalisation illustré de façon schématique sur la figure 2, le module de batterie 1 comprend, à l'état assemblé, une succession de plaques 13 et de cellules 3 intercalées entre les plaques 13. L'ensemble de ces éléments 3, 13 sont agencés en appui mécanique les uns contre les autres, de façon à permettre un échange thermique entre les grandes faces latérales 9 des cellules 3 et les grandes faces latérales 19 des plaques 13 qui sont en contact.

Selon une variante de réalisation illustrée sur la figure 3, au moins deux cellules 3 sont agencées entre deux plaques 13. Dans ce cas, au moins un isolant électrique 21 est intercalé entre deux cellules 3 adjacentes. L'isolant électrique 21 est accolé contre deux grandes faces latérales 9 respectives de chacune de ces cellules 3. Plus précisément, dans le cas de deux cellules 3 intercalées entre deux plaques 13, l'isolant électrique 21 est situé sur la grande face latérale 9 de chaque cellule 3 qui est opposée à la grande face latérale 9 se trouvant en contact avec une plaque 13 de l'échangeur thermique 5.

Les canaux 15 de circulation de fluide caloporteur peuvent quant à eux être réalisés sous forme de tubes, par exemple de section sensiblement circulaire (figures 1 et 4) ou ovale (figure 5). On se réfère par la suite aux tubes 15 de circulation de fluide caloporteur, bien entendu les caractéristiques s'appliquent également à d'autres variantes de réalisation des canaux de circulation de fluide caloporteur.

Les tubes 15 sont par exemple agencés sensiblement droits dans l'échangeur thermique 5.

Les tubes 15 sont avantageusement réalisés dans un matériau conducteur thermique, tel qu'un matériau métallique, par exemple en aluminium ou alliage d'aluminium.

À l'état assemblé de l'échangeur thermique 5, les tubes 15 sont assemblés mécaniquement aux éléments d'échange thermique par exemple sous forme de plaques 13.

On peut prévoir notamment un assemblage par sertissage. À cet effet, les plaques 13 présentent une pluralité d'ouvertures 23 pour le passage des tubes 15. Les ouvertures 23 présentent donc une forme complémentaire de la forme des tubes 15 destinés à les traverser.

Bien entendu, les ouvertures 23 sont ménagées sur une zone de la plaque 13 dépourvue de contact mécanique avec une cellule 3 à l'état assemblé du module de batterie 1. Selon l'exemple de réalisation illustré, les ouvertures 23 sont prévues sur la périphérie des plaques 13. Les tubes 15 sont donc agencés de façon à traverser les plaques 13 en périphérie des plaques 13. Les tubes 15 s'étendent en traversant l'ensemble des plaques 13 sensiblement perpendiculairement aux plaques 13.

Les cellules 3 peuvent être introduites entre les plaques 13 soit après sertissage des tubes 15 dans les plaques 13, soit avant l'expansion des tubes 15 dans les ouvertures 23 pour assurer le sertissage entre les tubes 15 et les plaques 13.

Ainsi, en fonctionnement de l'échangeur thermique 5, les tubes 15 sertis sur les plaques 13, refroidissent, par conduction, les plaques 13 en contact direct avec les cellules 3 ; les cellules 3 s'en trouvent refroidies. Plus précisément, de par l'agencement particulier des tubes 15 traversant les périphéries des plaques 13, les cellules 3 sont respectivement refroidies depuis la périphérie vers le centre.

Les tubes 15 peuvent être assemblés aux plaques 13 avec un pas régulier entre les tubes 15, ou en variante avec un pas irrégulier entre les tubes 15, comme illustré sur les figures 4 et 5. On réalise ainsi une densification des tubes 15 sur au moins certaines zones des plaques 13. Selon l'exemple illustré sur les figures 4 et 5, les tubes 15 sont plus concentrés sur une zone de la plaque 13 à proximité des bornes de connexion 11 de la cellule 3 associée. Bien entendu, la densification des tubes 15 peut se faire sur toute autre zone identifiée comme nécessitant un refroidissement plus important, par exemple à proximité de toute zone d'échauffement de la cellule 3 associée.

En outre, la pluralité de tubes 15 peuvent être disposés sensiblement en parallèle les uns par rapport aux autres comme schématisé sur les figures 1 et 4. Ainsi, selon le mode de réalisation particulier des figures 1 et 4, les tubes 15 sont agencés sensiblement parallèles et de façon à traverser les plaques 13 en périphérie des plaques 13 en s'étendent sensiblement perpendiculairement aux plaques 13.

En alternative, les tubes 15 peuvent être disposés selon des orientations différentes. À titre d'exemple, comme on le voit sur la figure 5 un premier groupe 15₁ de tubes 15 peuvent être agencés de façon sensiblement parallèle les uns aux autres selon une première direction, et un deuxième groupe 15₂ de tubes 15 peuvent être agencés de façon sensiblement parallèle les uns aux autres selon une deuxième direction différente de la première direction. De façon similaire au mode de réalisation des figures 1 et 4, les tubes 15 du premier groupe 15₁ et du deuxième groupe 15₂ peuvent être agencés en périphérie des plaques 13.

Ainsi, il est possible d'optimiser les zones de refroidissement des plaques 13 par densification plus ou moins importante des tubes 15. En complément ou en alternative, les zones de refroidissement des plaques 13 sont optimisées en adaptant la forme et/ou l'orientation des tubes 15.

En se référant de nouveau à la figure 1, les tubes 15 présentent en outre respectivement au moins une extrémité assemblée mécaniquement à une boîte collectrice 17 de l'échangeur thermique 5, formant boîte à eau dans le cas d'un fluide caloporteur tel que de l'eau glycolée par exemple.

Selon le mode de réalisation illustré sur la figure 1, les tubes 15 sont reliés par chaque extrémité à une boîte collectrice 17. Le faisceau de tubes 15 est donc assemblé aux deux boîtes collectrices 17.

Les boîtes collectrices 17 comprennent respectivement une paroi ou plaque collectrice 25 recevant les extrémités des tubes 15 et un couvercle 27 pour fermer la boîte collectrice 17.

La plaque collectrice 25 et le couvercle 27 sont avantageusement réalisés d'une seule pièce, par exemple dans un matériau plastique.

La plaque collectrice 25 a de préférence une forme générale sensiblement rectangulaire.

Selon le mode de réalisation illustré, la plaque collectrice 25 présente une multiplicité d'ouvertures 29 recevant respectivement l'extrémité d'un tube 15. Les ouvertures 29 présentent donc une section de forme complémentaire à la forme des extrémités des tubes 15.

Chaque extrémité de tube 15 est reçue dans une ouverture 29 associée d'une plaque collectrice 25 de l'échangeur thermique 5 à assemblage mécanique, par opposition à un « échangeur thermique brasé », dans lequel les extrémités des tubes sont brasées sur la plaque collectrice.

Selon l'invention, les tubes 15 sont avantageusement assemblés aux boîtes collectrices 17 avec interposition d'un joint d'étanchéité compressible (non représenté). Pour cela, les plaques collectrices 25 reçoivent au moins un joint d'étanchéité compressible au niveau des ouvertures 29 de la plaque collectrice 25. À l'état assemblé, chaque joint se trouve comprimé dans l'espace compris entre l'extrémité d'un tube 15 et une ouverture 29 de la plaque collectrice 25. Le joint est avantageusement réalisé en matériau élastomère.

L'échangeur thermique 5 comprend en outre une entrée de fluide 31 et une sortie de fluide 33 agencée sur au moins une boîte collectrice 17.

Selon le mode de réalisation illustré, l'entrée de fluide 31 et la sortie de fluide 33 sont agencées au niveau d'une même boîte collectrice 17. Dans ce cas, on peut envisager selon une variante non représentée une cloison dans la boîte collectrice 17 permettant de séparer le fluide entrant dans l'échangeur thermique 5 et le fluide sortant de l'échangeur thermique 5.

Ainsi, le fluide caloporteur, par exemple de l'eau glycolée, est introduit dans le faisceau par l'entrée de fluide 31 sur l'une des boîtes collectrices 17, puis est distribué dans des tubes 15 à l'aide de la plaque collectrice 25 de la boîte collectrice 17, l'étanchéité des tubes 15 avec la plaque collectrice 25 et plus généralement la boîte collectrice 17, est assurée par exemple à l'aide d'un joint en élastomère, comprimé entre chaque tube 15 et la plaque collectrice 25.

Dans cet exemple, le fluide ayant circulé dans un premier sens peut circuler dans l'autre sens à travers d'autres tubes 15 pour revenir au niveau de la même boîte collectrice 17 et être évacué par la sortie de fluide 33.

On comprend donc qu'un échangeur thermique 5 à assemblage thermique selon l'invention intégré à un module de batterie 1, permet d'optimiser le refroidissement des cellules 3 tout en fiabilisant l'étanchéité.

L'échangeur thermique 5 selon l'invention présente une solution compacte permettant d'augmenter l'échange thermique tout en offrant une adaptabilité aux besoins de refroidissement, notamment par rapport à des zones d'échauffement des cellules 3 du module de batterie 1, par exemple en modifiant la taille, l'orientation et/ou la concentration des tubes 15 pour la circulation du fluide caloporteur au niveau des plaques 13 d'échange thermique.

Enfin, le transfert thermique est homogénéisé du fait du contact direct entre les surfaces des cellules 3 et les plaques 13 d'échange thermique.

## Revendications

1. Module de batterie (1), notamment pour véhicule automobile, comprenant un empilement de cellules (3) électrochimiques et un échangeur thermique (5), l'échangeur thermique (5) comprenant:
- une pluralité d'éléments d'échange thermique (13), entre lesquels est positionnée au moins une cellule (3) électrochimique en contact thermique et mécanique contre au moins un élément d'échange thermique (13), et
- une pluralité de canaux (15) de circulation d'un fluide caloporteur assemblés mécaniquement aux éléments d'échange thermique (13),
- au moins un collecteur (17) du fluide caloporteur, **caractérisé en ce que** les canaux (15) de circulation du fluide caloporteur présentent respectivement au moins une extrémité assemblée mécaniquement au collecteur (17) avec interposition d'un joint d'étanchéité compressible (29).

2. Module de batterie (1) selon la revendication 1, dans lequel chaque cellule (3) électrochimique est intercalée entre deux éléments d'échange thermique (13), en contact thermique et mécanique contre les deux éléments d'échange thermique (13).

3. Module de batterie (1) selon la revendication 1, dans lequel au moins deux cellules (3) électrochimiques sont agencées entre deux éléments d'échange thermique (13), et au moins un isolant électrique (21) est intercalé entre deux cellules (3) électrochimiques adjacentes.

4. Module de batterie (1) selon l'une quelconque des revendications précédentes, dans lequel les canaux (15) de circulation de fluide caloporteur sont assemblés par sertissage aux éléments d'échange thermique (13).

5. Module de batterie (1) selon l'une quelconque des revendications précédentes, dans lequel les éléments d'échange thermique (13) présentent une pluralité d'ouvertures (23) pour le passage des canaux (15) de circulation de fluide caloporteur, les ouvertures (23) étant ménagées sur une zone d'un élément d'échange thermique (13) dépourvue de contact mécanique avec une cellule (3) électrochimique.

6. Module de batterie (1) selon l'une quelconque des revendications précédentes, dans lequel les éléments d'échange thermique (13) et/ou les canaux (15) de circulation de fluide caloporteur sont réalisés dans un matériau métallique, par exemple en aluminium ou alliage d'aluminium.

7. Module de batterie (1) selon l'une quelconque des revendications précédentes, dans lequel les éléments d'échange thermique (13) sont réalisés sous forme de plaques (13), et dans lequel les cellules (3) électrochimiques présentent une forme générale sensiblement parallélépipédique complémentaire de la forme des éléments d'échange thermique (13) de l'échangeur thermique (5).

8. Module de batterie (1) selon la revendication précédente, dans lequel les canaux (15) de circulation de fluide caloporteur sont agencés de façon à traverser les plaques (13) en périphérie des plaques (13) et en s'étendant sensiblement perpendiculairement aux plaques (13).

9. Module de batterie (1) selon l'une quelconque des revendications 1 à 8, dans lequel les canaux de circulation du fluide caloporteur sont agencés de façon sensiblement parallèle les uns aux autres.

10. Module de batterie (1) selon l'une quelconque des revendications 1 à 8, dans lequel au moins un premier groupe (151) de canaux de circulation du fluide caloporteur (15) sont agencés de façon sensiblement parallèle les uns aux autres selon une première direction, et au moins un deuxième groupe (152) de canaux de circulation du fluide caloporteur (15) sont agencés de façon sensiblement parallèle les uns aux autres selon une deuxième direction différente de la première direction.

11. Module de batterie (1) selon l'une quelconque des revendications précédentes, dans lequel les canaux (15) de circulation de fluide caloporteur sont réalisés sous forme de tubes (15), par exemple de section sensiblement circulaire ou ovale.

12. Module de batterie (1) selon l'une quelconque des revendications précédentes, dans lequel les canaux (15) de circulation de fluide caloporteur sont assemblés aux éléments d'échange thermique (13) avec un pas irrégulier entre lesdits canaux (15).

13. Module de batterie (1) selon la revendication précédente, dans lequel le collecteur (17) comprend une plaque collectrice (25) pour recevoir les extrémités des canaux (15) de circulation du fluide caloporteur et un couvercle (27), la plaque collectrice (25) et le couvercle (27) étant réalisés d'une seule pièce, par exemple dans un matériau plastique.

## Patentansprüche

1. Batteriemodul (1), insbesondere für ein Kraftfahrzeug, das einen Stapel elektrochemischer Zellen (3) und einen Wärmetauscher (5) enthält, wobei der Wärmetauscher (5) enthält:
- eine Vielzahl von Wärmetauscherelementen (13), zwischen denen mindesten eine elektrochemische Zelle (3) in thermischem und mechanischem Kontakt gegen mindestens ein Wärmetauscherelement (13) positioniert ist, und
- eine Vielzahl von Strömungskanälen (15) eines Wärmeträgerfluids, die mechanisch mit den Wärmetauscherelementen (13) zusammengebaut sind,
- mindestens einen Sammler (17) des Wärmeträgerfluids,
**dadurch gekennzeichnet, dass** die Strömungskanäle (15) des Wärmeträgerfluids mindestens ein mechanisch mit dem Sammler (17) zusammengebautes Ende mit Zwischenfügung einer komprimierbaren Dichtung (29) aufweisen.

2. Batteriemodul (1) nach Anspruch 1, wobei jede elektrochemische Zelle (3) zwischen zwei Wärmetauscherelemente (13) in thermischem und mechanischem Kontakt gegen die zwei Wärmetauscherelemente (13) eingeschoben ist.

3. Batteriemodul (1) nach Anspruch 1, wobei mindestens zwei elektrochemische Zellen (3) zwischen zwei Wärmetauscherelementen (13) angeordnet sind, und mindestens eine elektrische Isolierung (21) zwischen zwei benachbarte elektrochemische Zellen (3) eingeschoben ist.

4. Batteriemodul (1) nach einem der vorhergehenden Ansprüche, wobei die Strömungskanäle (15) von Wärmeträgerfluid durch Quetschverbindung mit den Wärmetauscherelementen (13) zusammengebaut sind.

5. Batteriemodul (1) nach einem der vorhergehenden Ansprüche, wobei die Wärmetauscherelemente (13) eine Vielzahl von Öffnungen {23) für den Durchlass der Strömungskanäle (15) von Wärmeträgerfluid aufweisen, wobei die Öffnungen (23) in einem Bereich eines Wärmetauscherelements (13) eingerichtet sind, der keinen mechanischen Kontakt mit einer elektrochemischen Zelle (3) aufweist.

6. Batteriemodul (1) nach einem der vorhergehenden Ansprüche, wobei die Wärmetauscherelemente ({13) und/oder die Strömungskanäle (15) von Wärmeträgerfluid aus einem metallischen Material hergestellt sind, zum Beispiel aus Aluminium oder Aluminiumlegierung.

7. Batteriemodul (1) nach einem der vorhergehenden Ansprüche, wobei die Wärmetauscherelemente (13) in Form von Platten (13) hergestellt werden, und wobei die elektrochemischen Zellen (3) eine im Wesentlichen parallelepipedische Form komplementär zur Form der Wärmetauscherelemente (13) des Wärmetauschers (5) aufweisen.

8. Batteriemodul (1) nach dem vorhergehenden Anspruch, wobei die Strömungskanäle (15) von Wärmeträgerfluid so angeordnet sind, dass sie die Platten (13) am Umfang der Platten (13) durchqueren und indem sie sich im Wesentlichen lotrecht zu den Platten (13) erstrecken.

9. Batteriemodul (1) nach einem der Ansprüche 1 bis 8, wobei die Strömungskanäle des Wärmeträgerfluids im Wesentlichen parallel zueinander angeordnet sind.

10. Batteriemodul (1) nach einem der Ansprüche 1 bis 8, wobei mindestens eine erste Gruppe (151) von Strömungskanälen des Wärmeträgerfluids (15) im Wesentlichen parallel zueinander gemäß einer ersten Richtung angeordnet sind, und mindestens eine zweite Gruppe (152) von Strömungskanälen des Wärmeträgerfluids (15) im Wesentlichen parallel zueinander gemäß einer zweiten Richtung anders als die erste Richtung angeordnet sind.

11. Batteriemodul (1) nach einem der vorhergehenden Ansprüche, wobei die Strömungskanäle (15) von Wärmeträgerfluid in Form von Rohren (15) hergestellt sind, zum Beispiel mit einem im Wesentlichen kreisförmigen oder ovalen Querschnitt.

12. Batteriemodul (1) nach einem der vorhergehenden Ansprüche, wobei die Strömungskanäle (15) von Wärmeträgerfluid mit den Wärmetauscherelemente (13) mit einem unregelmäßigen Abstand zwischen den Kanälen (15) zusammengebaut sind.

13. Batteriemodul (1) nach dem vorhergehenden Anspruch, wobei der Sammler (17) eine Sammelplatte (25), um die Enden der Strömungskanäle (15) des Wärmeträgerfluids aufzunehmen, und einem Deckel (27) enthält, wobei die Sammelplatte (25) und der Deckel (27) aus einem Stück zum Beispiel aus einem Kunststoff hergestellt sind.

## Claims

1. Battery module (1), notably for a motor vehicle, comprising a stack of electrochemical cells (3) and a heat exchanger (5), the heat exchanger (5) comprising:
- a plurality of heat exchange elements (13), between which there is positioned at least one electrochemical cell (3) in thermal and mechanical contact against at least one heat exchange element (13), and
- a plurality of heat transfer fluid circulation channels (15) joined mechanically to the heat exchange elements (13),
- at least one heat transfer fluid manifold (17), **characterized in that** the heat transfer fluid circulation channels (15) respectively have at least one end joined mechanically to the manifold (17) with the interpositioning of a compressible seal ring (29).

2. Battery module (1) according to Claim 1, wherein each electrochemical cell (3) is inserted between two heat exchange elements (13), in thermal and mechanical contact against the two heat exchange elements (13) .

3. Battery module (1) according to Claim 1, wherein at least two electrochemical cells (3) are arranged between two heat exchange elements (13), and at least one electrical insulator (21) is inserted between two adjacent electrochemical cells (3).

4. Battery module (1) according to any one of the preceding claims, wherein the heat transfer fluid circulation channels (15) are joined together by clamping with the heat exchange elements (13).

5. Battery module (1) according to any one of the preceding claims, wherein the heat exchange elements (13) have a plurality of apertures (23) for the passage of the heat transfer fluid circulation channels (15), the apertures (23) being formed on a zone of a heat exchange element (13) with no mechanical contact with an electrochemical cell (3).

6. Battery module (1) according to any one of the preceding claims, wherein the heat exchange elements (13) and the heat transfer fluid circulation channels (15) are produced in a metal material, for example aluminium or aluminium alloy.

7. Battery module (1) according to any one of the preceding claims, wherein the heat exchange elements (13) are produced in the form of plates (13), and wherein the electrochemical cells (3) have a generally substantially parallelepipedal form complementing the form of the heat exchange elements (13) of the heat exchanger (5).

8. Battery module (1) according to the preceding claim, wherein the heat transfer fluid circulation channels (15) are arranged so as to pass through the plates (13) at the periphery of the plates (13) and by extending substantially at right angles to the plates (13).

9. Battery module (1) according to any one of Claims 1 to 8, wherein the heat transfer fluid circulation channels are arranged substantially parallel to one another.

10. Battery module (1) according to any one of Claims 1 to 8, wherein at least one first group (151) of heat transfer fluid circulation channels (15) are arranged substantially parallel to one another in a first direction, and at least one second group (152) of heat transfer fluid circulation channels (15) are arranged substantially parallel to one another in a second direction different from the first direction.

11. Battery module (1) according to any one of the preceding claims, wherein the heat transfer fluid circulation channels (15) are produced in a form of pipes (15), for example of substantially circular or oval section.

12. Battery module (1) according to any one of the preceding claims, wherein the heat transfer fluid circulation channels (15) are joined together with the heat exchange elements (13) with an irregular pitch between said channels (15).

13. Battery module (1) according to the preceding claim, wherein the manifold (17) comprises a manifold plate (25) for receiving the ends of the heat transfer fluid circulation channels (15) and a cover (27), the manifold plate (25) and the cover (27) being produced in a single piece, for example in a plastic material.
